Europäisches Patentamt

European Patent Office

Office européen des brevets

(11) Publication number: **0 517 389 A2**

# EUROPEAN PATENT APPLICATION

(21) Application number: **92304470.5**

(22) Date of filing: **18.05.92**

(51) Int. Cl.5: **H01M 10/39**, H01M 2/02, H01M 2/20

(30) Priority: **04.06.91 GB 9111982**

(43) Date of publication of application:
**09.12.92 Bulletin 92/50**

(84) Designated Contracting States:
**PT**

(71) Applicant: **CHLORIDE SILENT POWER LIMITED**
**Davy Road Astmoor Industrial Estate**
**Runcorn Cheshire, WA7 1PZ(GB)**

(72) Inventor: **O'Neil-Bell, Christopher**
**"Oakwood", 27 Penketh Road**
**Great Sankey, Warrington WA7 2TE(GB)**

(74) Representative: **Cross, Rupert Edward Blount**
**et al**
**BOULT, WADE & TENNANT 27 Furnival Street**
**London EC4A 1PO(GB)**

(54) **An alkali metal energy conversion cell.**

(57) An alkali metal energy conversion cell includes an external casing. A solid electrolyte cup divides the interior of the casing into two electrode regions. An electrically insulating element is joined to the cup. One end of the casing is formed with a first and a second annular flange. The first annular flange is secured to one surface of the insulating element by a compression bond. The second annular flange extends outward of the casing and bears solidly on a second surface of the insulating element opposed to the surface to which the first annular flange is secured.

An electrically conductive cup-shaped connector is electrically connected to the current collector of the cell. The connector is dimensioned and configured for receiving and engaging, in an interference fit, the casing of another cell to be connected in series.

FIG.3.

The present invention relates primarily to an alkali metal energy conversion cell. In particular, the present invention relates to a high temperature cell which operates at an elevated temperature above ambient temperature, typically above 100°C. One example of an alkali metal energy conversion cell is a sodium sulphur cell whose operating temperature is between 300°C and 400°C, typically 350°C. The present invention further relates to a series arrangement of such cells and to a battery comprising a plurality of such cells.

WO89/00344 (Chloride Silent Power Limited) discloses a sodium sulphur cell and a battery comprising a plurality of sodium sulphur cells or series arrangement of sodium sulphur cells. Figures 1 and 2 of the present specification are based on Figures shown in that document.

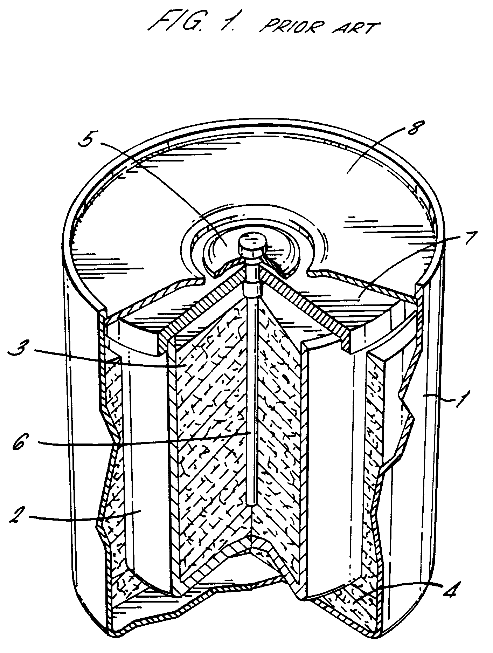

Figure 1 is a perspective view of a sodium sulphur cell with part broken away. As shown, the cell comprises a casing 1 of, for example, steel in the form of a right circular cylinder. A solid electrolyte cup 2 of beta alumina divides the casing 1 into two electrode regions. A sodium electrode 3 is contained within the cup 2 while a space between the casing 1 and the cup 2 contains a sulphur electrode 4. As sulphur is essentially non-conducting, the sulphur electrode 4 is generally formed as a carbon fibre mat impregnated with sulphur. For use, the cell is maintained at a temperature of between 300°C and 400°C such that the sodium and sulphur in the electrodes 3, 4 are in liquid form.

The casing 1 serves as a terminal for the sulphur electrode 4. The terminal for the sodium electrode 3 is provided by a centre terminal disc 5 connected, by welding, to a elongate metal current collector 6. The current collector 6 extends axially into the sodium electrode 3.

The open end of the cup 2 is closed by an insulating disc 7 of alpha alumina. The disc 7 also serves to hold the current collector 6 in position. The region containing the sulphur electrode 4 between the casing 1 and the cup 2 is closed by an annular sealing steel disc 8. In order to close the casing 1 of the cell, the terminal disc 5 and the steel disc 8 are secured to the alpha alumina disc 7, by a technique such as diffusion bonding, to form seals. The steel disc 8 is itself secured to the casing 1 by a welding technique. As alpha alumina is electrically insulating, it provides electrical insulation between the two terminals 5, 1 of the cell.

It will be noted that the steel disc 8 extends inwardly from the casing 1 and has a small internal diameter. The seal between the steel disc 8 and the alpha alumina disc 7 is made near the internal circumference of the annular disc 8. This reduces the size of the seal between the alpha disc 7 and the steel disc 8 and so alleviates the risk of the seal breaking due to differential thermal expansion of the two discs 7, 8 due to thermal cycling during operation of the cell.

It will be appreciated that with such a cell, the sodium and sulphur electrodes 3, 4 can have their locations reversed.

To provide a battery capable of powering a vehicle, it may be necessary for about 3,000 cells, as described with reference to Figure 1, to be assembled together in arrays of series/connected arrangements of cells, the arrangements in each array being connected in parallel, and the arrays of arrangement being connected in series.

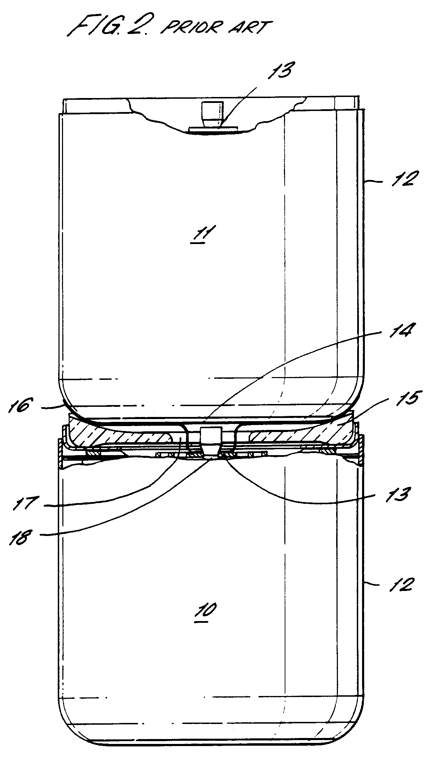

Figure 2, also taken from WO89/00344, is a side view, partly in section, of a series arrangement of two sodium sulphur cells 10, 11. Each cell 10, 11 is constructed as described in Figure 1.

Each cell 10, 11 has a cylindrical casing 12 constituting one terminal and a centre terminal disc 13, at one end of the casing 12, constituting the other terminal. The cells 10, 11 are arranged end-to-end with the centre terminal disc 13 of one cell 10 (the lower cell, as shown) adjacent an integral surface 14 of the casing 12 of the other cell 11 (the upper cell, as shown). An annular spacer member 15 of insulating ceramic or porcelain material is interposed between the two cells 10, 11 and serves to prevent contact between the cases 12 of the two cells 10, 11. The spacer member can be of any suitable insulating material, such as a ceramic or porcelain material, and can either be preformed, for example in the shape of an annulus, or otherwise formed in situ, for example, by injection of a cement material between the two cells.

A strip 16 of conductive metal extends across the integral surface 14 of the casing 12 of the upper cell 11. The free ends of the strip 16 are welded to the casing of the upper cell 11. At its centre, the strip 16 is formed to extend downwardly through an aperture 17 in the spacer member 15 to engage over the current collector 18 of the lower cell 10. The strip is welded to the centre terminal disc 13 of the lower cell 10 and, thus, provides electrical connection between the centre terminal disc 13 of the lower cell 10 and the casing 12 of the upper cell 11.

According to a first aspect of the present invention there is provided an alkali metal energy conversion cell comprising:

an external casing;

a solid electrolyte cup to divide the interior of the casing into two electrode regions;

EP 0 517 389 A2

and an electrically insulating element joined to the cup;

wherein one end of the casing is formed with a first and a second annular flange, said first annular flange being secured to one surface of said insulating element by a compression bond and said second annular flange extending outward of the casing and solidly bearing on a second surface of said insulating element opposed said one surface.

A cell provided in accordance with said first aspect of the present invention enables pressure to be applied to said first annular flange and said electrically insulating element, during construction of the cell, without the need for pressure to be applied to the cell as a whole. Accordingly, an annular hermetic seal can be produced between the casing and said electrically insulating element by any one of a number of methods of bonding using compression, which require the application of pressure to the components to be joined. Examples of methods of producing compression bonds are ultrasonic welding, as disclosed in WO91/00255 (Chloride Silent Power Limited) and high speed diffusion bonding (thermocompression bonding).

A further advantage of forming said first and second annular flanges from one end of the external casing is a reduction in the number of components of the cell and, in particular, the number of seals that need to be made between different components.

The diameter of a cell according to said first aspect of the present invention may be chosen so that the length of the seal between the casing and the ceramic disc is not so great that differential thermal expansion of the two components, during operation of the cell, becomes a significant problem.

Advantageously, said insulating element has an external diameter less than the maximum diameter of the casing so that the overall diameter of the cell is no more than the basic diameter of the casing.

A second aspect of the present invention provides a method of manufacturing a cell according to said first aspect including the steps of first shaping one end of the casing to form a first and second annular flange and then securing said first annular flange to one surface of said insulating element by a compression bond.

In a preferred feature of said first aspect of the present invention, at least a part of said insulating element may protrude axially of the cell beyond any part of the casing. The protruding part of the said insulating element, so formed, may be effective as a spacer member to prevent contact between the cases of two cells which are to be connected in series and arranged end-to-end.

Accordingly, a third aspect of the present invention provides an alkali metal energy conversion cell having an external casing, a solid electrolyte to divide the interior of the casing into two electrode regions and an electrically insulating element joined to the solid electrolyte and to the external casing, at least a part of said electrically insulating element protruding axially of the cell beyond the casing and any electrically conducting element electrically connected to the casing.

Another preferred feature of a cell according to said first aspect of the present invention is the provision of an electrically conductive cup-shaped connector member electrically connected to the current collector, wherein each of the connector member and the casing is made of a composite material comprising a substrate layer and a metal layer capable of forming at least a partial diffusion bond with an adjacent metal layer under its operating conditions, the substrate layer having a thermal coefficient of expansion no greater than the thermal coefficient of expansion of the metal layer, the casing being configured with a said metal layer on its external surface and the connector member being dimensioned and configured, with a said metal layer on the internal surface of the connector member, for receiving and engaging, in an interference fit, the casing of another cell to be connected in series.

The provision of such a connector member enables two cells, which are to be electrically connected in series, to be structurally connected end-to-end by, in effect, a press-fit connection. The use of press-fit connections to join cells together in a series arrangement has four advantages, namely:

(a) welding is no longer required to join the cells together;

(b) the string height will be identical for all series arrangements of cells in a battery;

(c) each series arrangement will form part of the structure of the battery; and

(d) the thermal gradient across the battery will be reduced.

Accordingly, a fourth aspect of the present invention provides an alkali metal energy conversion cell comprising an external casing, a solid electrolyte cup to divide the interior of the casing into two electrode regions, means closing the cup, a current collector extending through said closing means and into the cup, and an electrically conductive cup-shaped connector member electrically connected to the current collector, wherein each of the connector member and the casing is made of a composite material comprising a substrate layer and a metal layer capable of forming at least a partial diffusion bond with an adjacent metal layer under its operating conditions, the substrate layer having a thermal coefficient of expansion no greater than the thermal coefficient of expansion of the metal layer, the casing being configured with a said metal layer on its external surface and the connector member being dimensioned and configured, with a said metal layer on the internal surface of the connector member, for receiving and engaging, in an interference fit, the casing of another cell to be connected in series.

Advantageously, in a battery comprising a plurality of cells or series arrangements of cells arranged between a pair of electrically conductive bus plates, an electrically conductive cup-shaped connector may be provided which is electrically connected to a bus plate, the cup-shaped connector being dimensioned and configured for receiving and engaging the casing of an adjacent cell. With this feature, the advantage of a press-fit connection between relevant parts of a battery is enhanced.

A fifth aspect of the present invention provides a device for operation at an elevated temperature, the device comprising a first component and a second component structurally connected to each other in an interference fit with adjacent surfaces of said first component and said second component including respectively a first and a second layer of material between which at least a partial diffusion bond can be produced under the operating conditions of the device, the material on either side of said adjacent surfaces having a thermal coefficient of expansion no greater than the thermal coefficient of expansion of said first and said second layers of material.

Embodiments of the present invention will now be described, by way of example only, and with reference to the accompanying drawings in which:

Figure 1 shows a known sulphur sodium cell;

Figure 2 shows a known arrangement of two sodium sulphur cells connected in series; and

Figure 3 shows a cross-sectional view of an arrangement of two alkali metal energy conversion cells provided in accordance with various aspects of the present invention.

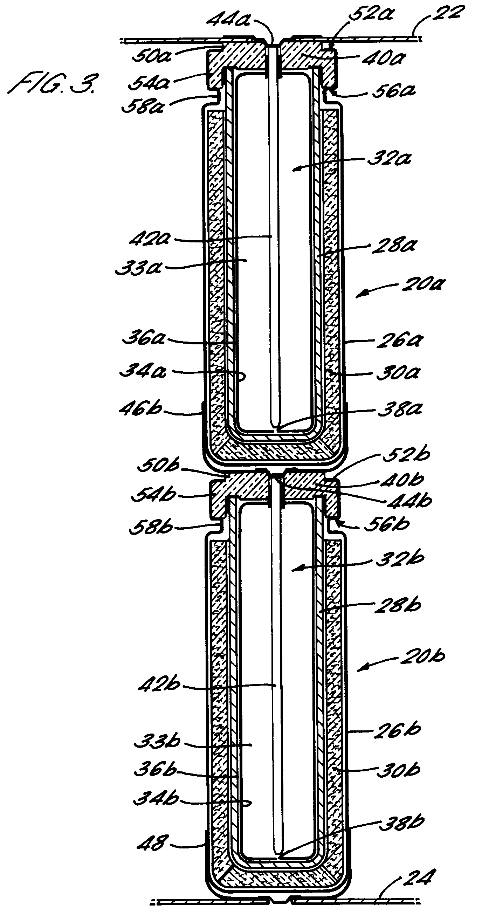

The two cells 20a, 20b, shown in Figure 3, are connected in series between a first bus bar 22 and a second bus bar 24. The two cells 20a and 20b are substantially identifcal. Accordingly, like parts in the cells 20a and 20b are designated by like reference numerals with the addition, respectively of the letters "a" and "b".

Each cell 20a, 20b includes an external casing 26a, 26b. The casing 26a, 26b is made of a composite material formed of at least two layers. One of the layers is a deformable layer which can be used to effect a weld to another component. The other layer is a substrate formed of a material that is stronger, harder or tougher than the first layer. The layer of deformable material is mechanically fixed in position relative to the substrate layer by any of a number of processes such as cold rolling, diffusion bonding, explosive welding, ultrasonic welding or by mechanical or chemical means. An example of a composite material which can be used for the external casing 26a, 26b is a steel substrate of thickness 0.25 mm on either side of which is solid phase welded a layer of aluminium. The two aluminium coatings have a respective thickness of 25 and 60 microns. The provision of a layer of aluminium protects the steel from corrosive attack by the contents of the cell. The aluminium coating further enables a solid phase bond to be formed between the composite material and another component.

A solid electrolyte cup 28a, 28b of beta alumina divides the external casing into two electrode regions. In the outer region between the cup 28a, 28b and the casing 26a, 26b is provided a sulphur electrode 30a, 30b formed as a carbon fibre mat impregnated with sulphur. The carbon fibre provides electrical connection between the casing 26a, 26b and the cup 28a, 28b as sulphur is essentially non-conducting. Accordingly, the casing 26a, 26b is effective as one terminal of the cell 20a, 20b.

The inside of the cup 28a, 28b forms an anode region 32a, 32b. Sodium 33a, 33b is contained in a reservoir 34a, 34b which is of generally cylindrical shape. The reservoir 34a, 34b is sized to fit snuggly within the cup 28a, 28b leaving only a narrow space or active region 36a, 36b between the reservoir 34a, 34b and the internal surface of the cup 28, 28b. An outlet 38a, 38b is provided from the reservoir 34a, 34b into the active region 36a, 36b such that a film of molten sodium can be drawn into the active region by capillary action. Because of capillary action, a major part of the internal surfaces of the electrolyte cup 28a, 28b is wetted by the molten sodium, even when the amount of sodium in the anode region, as a whole, is low.

The open end of the cup 28a, 28b is closed by a cap of insulating material, typically a disc of 40a, 40b of a ceramic such as alpha alumina. The disc 40a, 40b is sealed to the cup 28a, 28b by glazing.

An elongate current collector 42a, 42b extends through an aperture in the alpha alumina disc 40a, 40b into the anode region 32a, 32b. The current collector 42a, 42b provides electrical connection between the anode material and a central terminal disc 44a, 44b. The current collector 42a, 42b may make electrical connection to the sodium 33a, 33b directly or via the reservoir 34a, 34b. The terminal disc 44a, 44b provides the second terminal of the cell 20a, 20b and is electrically insulated from the casing 26a, 26 by the ceramic disc 40a, 40b.

The two cells 20a, 20b are arranged end-to-end, as shown in Figure 3 and electrically connected in

4

series between the terminal disc 40b of one cell 20b and the casing 26a of the other cell 20a. An electrically conductive connector member 46b is electrically connected and mechanically fixed to the terminal disc 40b of the cell 20b (the lower cell as shown). The connector member 46b is cup-shaped and dimensioned and configured to engage the casing 26a of the adjacent cell 20a. Advantageously, the connector member 46b is made of the same composite material as the casing 26a and has an internal diameter which is no greater than the external diameter of the adjacent casing 26a. The internal diameter of the connector member 46b may be the same as the external diameter of the casing 26a or upto 4 thou less. Accordingly, a certain amount of force (of between 10 and 55 kg) is required to insert the cell 20a into the connector member 46b. After the cell 20a has been inserted into the connector member 46b, the open end of the connector member 46b springs back to hold the cell 20a structurally. In this way, a press-fit or interference fit connection is made between the cell 20a and the connector 46b of the adjacent cell 20b. The linear contact length between the connector 46b and the casing 26a is between 3 to 10 mm depending on the diameter of the cell case. The connector member 46b may be provided integral with the terminal disc 40b.

A stand-alone cup-shaped connector member 48 provides electrical and structural connection between the casing 26b of the cell 20b and the adjacent bus bar 24. The stand-alone connector member 48 is similar in all respects to the connector member 46b of the cell 20b but is connected to the bus bar and not to a cell.

The inter-connection of the cells by press-fit connections has several advantages, in particular:

1. It is not necessary to weld the cells together.

2. As the joining together of cells in a series arrangement is not complicated by the need to weld a connector of fixed length to a particular part of the casing of an adjacent cell, the construction of series arrangements of cells having a defined height, from end-to-end, is more reliable. Accordingly, series arrangements of cells, having the same number of cells, can more easily be made of identical height.

3. Each connector member holds the adjacent cell structurally and mechanically, as well as providing an electrical connection between the terminals of adjacent cells. Accordingly, each series arrangement of cells can provide structural integrity to the battery.

4. The thermal gradient across the battery is reduced because of the improved thermal conducting paths provided by the cup shaped connector members.

The closed end of the casing may be configured to be smaller than the body of the casing so that the external diameter of the connector member 46b is the same as the external diameter of the body of the casing so that the volumetric efficiency of the cell is not degraded. The required reduction in diameter of the closed end of the casing need only be sufficient to accommodate the connector member.

As already indicated, the connector member is preferably made of the same material as the casing to avoid expansion mismatch during thermal cycling. The materials should further be chosen to be capable of withstanding the normal operating temperatures of the cell, to be electrically conductive and to be mechanically strong.

A further unexpected advantage was found when both the casing and the connector member were made of a composite material in which a layer of aluminium was coated onto a substrate layer of steel. It was found that the strength of the press fit connection was increased after the cells had been heated to their operating temperature of 350°C and then held at that operating temperature for a short period (typically two hours). Furthermore, the strength of the connection increased with the time for which the cells were held at their operating temperature. This finding indicates that, although the press fit connection is purely structural in origin, at least a partial solid phase weld was produced as the construction was exposed to a temperature of 350°C for a period of time.

It appears that the formation of at least a partial solid phase weld between the connector member and the casing of the cell is not welding as such but a bonding promoted by diffusion between the adjacent aluminium layers of the casing and the cell. The formation of the weld may be assisted by a diffusion aid such as a sputter coating of silver, though this has not been found to be necessary in practice. The mechanism by which the increase in the strength of the connection is produced is speculated to be as follows:

1. Steel have a lower thermal coefficient of expansion than aluminium.

2. When the casing and the connector member are fitted together, some pressure is applied to the aluminium layers, sandwiched between the steel substrate layers of the casing and the connector member, due to the interference fit of the two components.

3. When the temperature of the system is raised to an elevated temperature, the steel substrate layer of the connector member expands less than the intermediate aluminium layers. Accordingly, the intermediate aluminium layers are further under compression.

4. Diffusion between the two aluminium layers is promoted by the combination of the elevated temperature and the pressure applied to the aluminium layers.

As shown in Figure 3, the base of the connector member 46b is supported by a portion 50b of the ceramic disc 40b. The portion 50b protrudes axially of the cell 20b beyond any part of the casing 26b. Accordingly, despite the arrangement of the cells 20a, 20b end-to-end, the connector member 46b, and hence the terminal disc 44b of the cell 20b and the casing 26a of the cell 20a, is electrically insulated from the casing 26b. Because of this, no short-circuit route is provided between the two cells 20a, 20b during normal operation of the series arrangement of cells 20a, 20b. As the ceramic disc 40b closes the cup 28a, 28b, the support provided by the protruding portion 50b is relatively even across the base of the connector 46b.

The cell 20a, 20b itself is closed by a hermetic seal between the ceramic disc 40a, 40b and an annular flange 52a, 52b at the end of the casing 26a, 26b. The hermetic seal is a solid phase bond formed by a method such as ultrasonic welding or high speed diffusion bonding (thermocompression). These methods require the application of pressure to the components to be joined. In order to assist the application of pressure, the ceramic disc 40a, 40b is configured so that its external diameter is greater than the diameter of at least a part of the casing 26a, 26b.

In the embodiment of Figure 3, the ceramic disc 40a, 40b is formed with a collar 54a, 54b and the annular flange 52a, 52b of the casing is sealed to the top of the collar 54a, 54b which is the peripheral step of the ceramic disc 40a, 40b. The end of the casing 26a, 26b is formed around the collar 54a, 54b of the ceramic disc with a second annular flange 56a, 56b being formed parallel with the first annular flange 52a, 52b and bearing solidly on the surface of the ceramic disc opposed to the surface on which the annular flange 52a, 52b has been sealed to the ceramic disc 40a, 40b. A neck 58a, 58b is formed in the casing 26a, 26b above the top of the sulphur electrode 30a, 30b. As the external diameter of the ceramic disc 40a, 40b is greater than the external diameter of the neck 58a, 58b, formation of the end of the casing around the collar 54a, 54b of the ceramic disc 40a, 40b ensures that the casing is kinked inwardly below the second flange 56a, 56b of the casing 26a, 26b. Accordingly, during sealing of the ceramic disc 40a, 40b to the casing 26a, 26b, a tool can be inserted below the second flange 56a, 56b so that the axial pressure required during formation of the seal is applied to the combination of the casing and the ceramic disc.

Three methods of forming the casing of the cell around the ceramic disc 40a, 40b are contemplated.

1. Rolling

The sulphur electrode and the electrolyte assembly are placed inside the cell casing. The cell is then placed below a pair of rotating rollers that close onto the top of the cell casing and rotate around it, so forming the casing over and below the ceramic disc. The electrolyte assembly may be filled with sodium before or after the forming operation has been carried out.

2. Progressive Forming

The sulphur electrode and the electrolyte assembly are placed inside the casing. The cell is then placed below a set of press tools. Each press tool would be shaped so that the casing would be progressively formed inwards, around the ceramic disc, as each press tools is pressed onto the open end of the cell casing. Again, the electrolyte assembly may be filled with sodium before or after the forming operation has been carried out.

3. Magnetic Forming

The sulphur electrode and the electrolyte assembly are placed inside the cell casing. The casing is surrounded by an electrically conductive coil. A very high short duration current is pulsed through the component so generating a magnetic field around the coil and the casing. As the fields are like, the casing is repelled from the coil. The ceramic disc is effective as a former around which the casing is formed as it is repelled by the magnetic forces.

The cells shown in Figure 3 have been designed for high discharge rate (HDR) operation. The HDR cell has the following dimensions:

| DIMENSION | HDR CELL |
|---|---|
| Maximum external diameter of casing | 29.54 mm |
| Internal diameter of electrolyte cup 28a, 28b | 17.80 mm |
| Axial length of the electrolyte cup 28a, 28b | 81.10 mm |
| Internal surface area of electrolyte cup 28a, 28b | 1.46 $m^2$ |
| Internal diameter of connector member 46b | 29.54 mm |
| Axial length of connector member 46b | 3 to 10 mm depending on diameter of cell |

Because of the increase in electrolyte area, a HDR cell can be discharged at a rate 27% faster than prior art cells.

Modifications to the embodiment described within the scope of various aspects of the present invention will be apparent to those skilled in the art.

In respect of said first and second aspects of the present invention, the first annular flange of the casing may be bonded directly to the uppermost part of the ceramic disc if a separate separator is used to separate the casings of adjacent cells in a series arrangement.

In relation to said third aspect of the present invention, the ceramic disc may be configured to protrude above a metallic closure member or other electrically conductive component electrically connected to the external casing. Furthermore, the protruding portion of the ceramic disc may support the external casing of an adjacent cell directly if connections between the terminals of the cells are made as shown in the prior art.

In relation to said fourth aspect of the present invention, such connector members may be used with prior art cells.

As indicated by said fifth aspect of the present invention, it is envisaged that the formation of an interconnection described with respect to the casing and the connector member may be applicable to other devices for operation at elevated temperatures.

## Claims

1. An alkali metal energy conversion cell comprising:
   an external casing;
   a solid electrolyte cup to divide the interior of the casing into two electrode regions;
   and an electrically insulating element joined to the cup;
   wherein one end of the casing is formed with a first and a second annular flange, said first annular flange being secured to one surface of said insulating element by a compression bond and said second annular flange extending outward of the casing and solidly bearing on a second surface of said insulating element opposed said one surface.

2. A cell according to Claim 1 wherein the casing is made of a composite material comprising a substrate layer and a deformable metal layer mechanically fixed to said substrate layer, said substrate layer being formed of a material which is harder than said deformable metal.

3. A cell according to Claims 1 or 2 wherein said first and said second annular flange extend perpendicular to the longitudinal axis of the casing.

4. A cell according to Claims 1 to 3 wherein said insulating element has an external diameter less than the maximum diameter of the casing.

5. A cell according to any one of the preceding claims wherein at least a part of said insulating element protrudes axially of the cell beyond any part of the casing.

6. A cell according to Claim 5 wherein said insulating element extends radially to close the cup.

7. A cell according to any one of the preceding claims including an electrically conductive cup-shaped connector member electrically connected to the current collector, wherein each of the connector member and the casing is made of a composite material comprising a substrate layer and a metal layer capable of forming at least a partial diffusion bond with an adjacent metal layer under its operating conditions, the substrate layer having a thermal coefficient of expansion no greater than the thermal coefficient of expansion of the metal layer, the casing being configured with a said metal layer on its external surface and the connector member being dimensioned and configured, with a said metal layer on the internal surface of the connector member, for receiving and engaging, in an interference fit, the casing of another cell to be connected in series.

8. A cell according to Claim 7 wherein said metal layer is mechanically fixed to said substrate layer.

9. A cell according to Claims 7 or 8 wherein the thermal coefficient of expansion of the substrate layer is less than the thermal coefficient of expansion of said metal layer.

**10.** A cell according to any one of Claims 7 to 9 wherein said metal layer is of aluminium.

**11.** A cell according to any one of Claims 7 to 10 wherein said substrate layer is of steel.

**12.** A cell according to any one of Claims 7 to 11 wherein the internal diameter of the connector member is less than the external diameter of the closed end of the casing.

**13.** A cell according to Claim 12 wherein the closed end of the casing is configured to be smaller than the body of the casing so that the external diameter of the connector member is the same as the external diameter of the body of the casing.

**14.** A cell according to any one of Claims 7 to 13 wherein the connector member includes a terminal disc electrically connected to the current collector.

**15.** A cell according to any one of Claims 7 to 14 wherein the connector member is formed integral with the current collector.

**16.** A battery comprising a plurality of cells according to any one of the preceding claims.

**17.** A battery according to Claim 16 wherein said plurality of cells are arranged in a plurality of series arrangements of cells, the series arrangements being connected in parallel.

**18.** A method of manufacturing a cell according to any one of Claims 1 to 15 including the steps of first shaping one end of the casing to form a first and second annular flange and then securing said first annular flange to one surface of said insulating element by a compression bond.

**19.** An alkali metal energy conversion cell having an external casing, a solid electrolyte to divide the interior of the casing into two electrode regions and an electrically insulating element joined to the solid electrolyte and to the external casing, at least a part of said electrically insulating element protruding axially of the cell beyond the casing and any electrically conducting element electrically connected to the casing.

**20.** A cell according to Claim 19 wherein said insulating element extends radially to close the cup.

**21.** A series arrangement of more than one cell according to Claims 19 or 20.

**22.** A battery comprising a plurality of series arrangements according to Claim 21.

**23.** An alkali metal energy conversion cell comprising an external casing, a solid electrolyte cup to divide the interior of the casing into two electrode regions, means closing the cup, a current collector extending through said closing means and into the cup, and an electrically conductive cup-shaped connector member electrically connected to the current collector, wherein each of the connector member and the casing is made of a composite material comprising a substrate layer and a metal layer capable of forming at least a partial diffusion bond with an adjacent metal layer under its operating conditions, the substrate layer having a thermal coefficient of expansion no greater than the thermal coefficient of expansion of the metal layer, the casing being configured with a said metal layer on its external surface and the connector member being dimensioned and configured, with a said metal layer on the internal surface of the connector member, for receiving and engaging, in an interference fit, the casing of another cell to be connected in series.

**24.** A cell according to Claim 23 wherein said metal layer is mechanically fixed to said substrate layer.

**25.** A cell according to Claims 23 or 24 wherein the thermal coefficient of expansion of the substrate layer is less than the thermal coefficient of expansion of said metal layer.

**26.** A cell according to any one of Claims 23 to 25 wherein said metal layer is of aluminium.

**27.** A cell according to any one of Claims 23 to 26 wherein said substrate layer is of steel.

**28.** A cell according to any one of Claims 23 to 27 wherein the internal diameter of the connector member is less than the external diameter of the closed end of the casing.

**29.** A cell according to Claim 28 wherein the closed end of the casing is configured to be smaller than the body of the casing so that the external diameter of the connector member is the same as the external diameter of the body of the casing.

**30.** A cell according to any one of Claims 23 to 29 wherein the connector member includes a terminal disc electrically connected to the current collector.

**31.** A cell according to any one of Claims 23 to 30 wherein the connector member is formed integral with the current collector.

**32.** A device for operation at an elevated temperature, the device comprising a first component and a second component structurally connected to each other in an interference fit with adjacent surfaces of said first component and said second component including respectively a first and a second layer of material between which at least a partial diffusion bond can be produced under the operating conditions of the device, the material on either side of said adjacent surfaces having a thermal coefficient of expansion no greater than the thermal coefficient of expansion of said first and said second layers of material.

**33.** A device according to Claim 32 wherein said first and said second components each include a substrate layer, said first and said second layers of material being sandwiched between the substrate layers.

**34.** A device according to Claim 33 wherein said substrate layers are each formed of a material which has a lower thermal coefficient of expansion than the material of said first and second layers.

**35.** A device according to Claim 33 or 34 wherein said substrate layers are each formed of steel.

**36.** A device according to any one of Claims 32 to 35 wherein said first and said second layers of material are of the same material.

**37.** A device according to any one of Claims 32 to 36 wherein the material of at least one of said first and second layer is aluminium.

**38.** A device according to Claim 37 wherein a sputter coating of silver is applied to the aluminium layer.

FIG. 1. PRIOR ART

FIG. 2. PRIOR ART

EP 0 517 389 A2

FIG. 3.